# EUROPÄISCHE PATENTSCHRIFT

(11) **EP 2 478 234 B1**
(45) Veröffentlichungstag und Bekanntmachung des Hinweises auf die Patenterteilung: **05.06.2013**
(21) Anmeldenummer: 10741913.7
(22) Anmeldetag: 28.07.2010
(51) Int. Cl.: F16C 11/06, F16C 33/28

(54) **GELENK MIT AN EINEM ZAPFEN BEFESTIGTEN KUGELKOPF UND EINER GLEITLAGERFOLIE FÜR DIESES GELENK**
JOINT WITH A BALL FIXED TO A BALL STUD AND A SLIDE BEARING FOIL FOR SAID JOINT
ARTICULATION À ROTULE ET FEUILLE LISSE POUR LA ROTULE

(30) Priorität: 18.09.2009 DE 102009041807
(43) Veröffentlichungstag der Anmeldung: 25.07.2012
(73) Patentinhaber: Hirschmann GmbH, 78737 Fluorn-Winzeln (DE)
(72) Erfinder: SCHAFFHAEUSER, Bernd, 78737 Fluorn-Winzeln (DE); HARTER, Rainer, 77773 Schenkenzeil (DE)
(74) Vertreter: Patentanwälte Westphal, Mussgnug & Partner
(86) Internationale Anmeldenummer: PCT/EP2010/004606
(87) Internationale Veröffentlichungsnummer: WO 2011/032616

(56) Entgegenhaltungen:
- DE-A1- 10 243 474
- GB-A- 1 181 686
- US-A- 5 513 433

## Beschreibung

Die Erfindung betrifft ein Gelenk gemäß den Merkmalen des Oberbegriffs des Anspruchs 1.

Solche Gelenke sind z. B. aus DE 102 43 474 A1 hinlänglich bekannt, insbesondere als Traggelenke bzw. Kugelgelenke für Lenkvorrichtungen von Kraftfahrzeugen.

Ein anderes Beispiel eines solchen Gelenks ist z.B. in DE 10 2007 016 713 A1 beschrieben. Dort ist ein Kugelgelenk offenbart mit einem kugelförmigen Gelenkkopf - auch als Kugelkopf bezeichnet - und einem sphärischen Gelenklager. Das Gelenklager weist eine mehrlagige Gleitlagerschale die zweigeteilt ist, auf. Die Gleitlagerschale besteht aus einer inneren Gleitschicht PTFE (Polytetrafluorethylen), welche auf eine Trägerschicht, z.B. ein Stahlgeflecht, geklebt ist. Mittels einer Haftvermittlerschicht ist dieses Stahlgeflecht auf eine elastische Schicht, die ein Elastomer enthält, aufgebracht. Ein solches Gelenklager kann ohne Zusatz von Schmiermittel betrieben werden und hat auf Grund der Verwendung der elastischen Schicht verbesserte Dämpfungseigenschaften. Der Kugelkopf dieses Gelenklagers wird von insgesamt zwei formstabilen Gleitlagerschalenteilen umgriffen, nämlich einem unteren halbkugelschalenförmigen Gleitlagerschalenteil sowie einem über diesem ersten Gleitlagerschalenteil sitzenden, ringförmigen. zweiten Gleitlagerschalenteil. Dieses obere, ringförmige Gleitschalenlagerteil muss bei der Montage des Gelenklagers über den Kugelzapfen geschoben werden, was aufwändig ist.

Ein anderes Gelenklager ist in DE 10 2008 003 730 A1 beschrieben. Das dortige Gelenklager weist einen kugelförmigen Innenkörper auf, der von zwei Gehäusehalbschalen außenseitig umgriffen wird. Jede der beiden Gehäuseschalen ist dabei innenseitig mit einer Gleitlagerfolie versehen. Hergestellt werden solche Gelenklager dadurch, dass eine besonders gestaltete Gleitlagerfolie auf die Innenseite der noch nicht umgeformten Gehäuseteile, beispielsweise durch Kleben, aufgebracht wird und anschließend eine Kaltumformung dieser Gehäuseteile erfolgt, damit sich diese der Oberfläche des kugelförmigen Innenkörpers anpassen, also zu Gehäusehalbschalen umgeformt werden.

Die vorliegende Erfindung hat das Ziel das Eingangs genannte Gelenk für höhere Traglasten auszugestalten, wobei eine verhältnismäßig steife Lagerung realisiert werden soll.

Dieses Ziel wird mit den Merkmalen des Anspruchs 1 erreicht.

Weiterbildungen der Erfindung sind Gegenstand der hierauf bezogenen Unteransprüche.

Die Erfindung beruht also im Wesentlichen darauf, ein Gelenk mit einem Zapfen bereitzustellen, welcher mit einem in einem mit einer Ausnehmung versehenen Außenkörper beweglich gelagerten Kugelkopf verbunden ist. Zwischen dem Kugelkopf und dem Außenkörper ist dabei ein Gleitelement angeordnet, das aus einer flexiblen Gleitlagerfolie gebildet ist. Diese Gleitlagerfolie weist durch Schlitze getrennt eine Vielzahl von zumindest annähernd sternförmig zueinander angeordnete und einstückig aneinander hängende Gleitlagerfolienstreifen auf, wobei die Gleitlagerfolie zwischen dem Außenkörper und dem Kugelkopf eingelegt ist, und zwar derart, dass die Gleitlagerfolienstreifen mit ihren jeweiligen Kanten überlappungs- und faltenfrei möglichst eng aneinander liegen.

Erfindungsgemäß ist dabei entweder in den Außenkörper und/oder die Lagerschale, sofern letztere verwendet wird, ein ringförmiger Anschlag vorgesehen als axiale Begrenzung für die Gleitlagerfolie.

Es liegt dabei im Rahmen der Erfindung, dass das erfindungsgemäße Gelenk ein Traggelenk und/oder ein Führungsgelenk ist. Der Zapfen kann dabei als Kugelzapfen, Kegelzapfen, Zylinderzapfen oder Bundzapfen mit oder ohne Scheibe ausgeführt sein.

Der entscheidende Vorteil bei dem Gelenk nach der Erfindung liegt darin, das eine einzige, einteilige Gleitlagerfolie im Gelenk verwendet werden kann. Zudem zeichnet sich das erfindungsgemäße Traggelenk durch eine verhältnismäßige hohe Steifigkeit aus, was insbesondere in Sportfahrwerken von Kraftfahrzeugen gewünscht ist.

Zusätzlich hat das erfindungsgemäße Traggelenk darüber hinaus eine hohe übertragbare, axiale und radiale Belastbarkeit. Das Traggelenk weist einen geringen Reibungskoeffizienten auf, einen kleinen Bauraum und ein geringes Gewicht. Schließlich wird Dank der Verwendung der Gleitlagerfolie ein größerer Temperatureinsatzbereich möglich.

Als Gleitlagerfolie eignet sich z.B. die von der Firma Saint-Gobain Performance Plastics Pampus GmbH, in D-47877 Willich unter der Bezeichnung NORDGLIDE® (eingetragene Marke) M vertriebene Gleitlagerfolie. Bei dieser Gleitlagerfolie handelt es sich um eine wartungsfreie, hochbelastbare Lagerfolie aus Metallgewebe und verschleißfestem PTFE-Compound. Eine solche Gleitlagerfolie weist einen Gleitlagerwerkstoff bestehend aus einem PTFE-Compound auf, der in einem flexiblen Metallgeweberücken eingesintert ist. Das PTFE-Compound kann mit einem 30%igen Füllstoffanteil aus Glasfasern und/oder Graphit bestehen. Das erwähnte Metallgewebe ist vorzugsweise ein Edelstahlgewebe aus Draht, welches an den Kreuzpunkten verbunden sein kann. Die Folie hat insgesamt eine Dicke von z. B. 0,5 mm.

Diese Gleitlagerfolie kann in dem erfindungsgemäßen Gelenk ohne weiteres schmiermittelfrei eingesetzt werden. Es ist jedoch auch möglich, ein Schmiermittel zusätzlich in das Traggelenk einzubringen.

In einer Weiterbildung der Erfindung schmiegt sich die geschlitzte Gleitlagerfolie mit ihren einzelnen Gleitlagerfolienstreifen kugelschalenförmig mehr als bzw. halbkugelschalenförmig um den Kugelkopf. Dabei liegt es im Rahmen der Erfindung, dass die Gleitlagerfolie mit ihren Gleitlagerfolienstreifen den Kugelkopf - ausgehend von einem axial tiefsten Punkt des Kugelkopfes - um mehr als den halben Durchmesser des Kugelkopfes übergreift, vorzugsweise etwa bis zu 2/3 des Durchmessers des Kugelkopfes. Damit umhüllt die Gleitlagerfolie den Kugelkopf fast vollständig, so dass eine optimale Gleitlagerung des Kugelkopfes im Außenkörper gewährleistet ist. Zweckmäßigerweise liegen die einzelnen Gleitlagerfolienstreifen möglichst spaltfrei aneinander.

Der Außenkörper des Gelenks kann ein Gehäuse und/oder eine Lagerschale aufweisen. Zweckmäßigerweise ist hierfür in das Gehäuse eine mindestens halbkugelförmige Ausnehmung zur Aufnahme des Kugelkopfes sowie eine darüber befindliche, ringförmige weitere Ausnehmung zur Aufnahme der ringförmigen Lagerschale vorgesehen.

Zur Sicherung des gesamten Traggelenks kann eine Ringmutter mittels eines Gewindes in den Außenkörper bzw. das Gehäuse auf die Lagerschale aufgeschraubt werden. Eine axiale Sicherung des gesamten Traggelenks wird hierdurch sichergestellt.

In einer besonderen Weiterbildung der Erfindung sind die von radial außen nach radial innen auf ein Zentrum der Gleitlagerfolie hin verlaufenden Schlitze, sofern man die flexible Gleitlagerfolie in einer Ebene aufspannt, von außen nach innen verjüngend, z.B. mindestens annährend dreiecksförmig, ausgebildet. Es hat sich dabei als günstig erwiesen, die einzelnen Gleitlagerfolienstreifen in Radialrichtung gesehen nach außen etwas auszuwölben, also bauchförmig, zu gestalten. Es sollte hierbei sichergestellt werden, dass beim kugelschalenförmigen Umschlingen des Kugelkopfes die einzelnen Gleitlagerfolienstreifen möglichst eng aneinander anliegen, also nur sehr kleine Spalte übrig lassen oder idealerweise überhaupt keine Spalte mehr vorhanden sind. Wesentlich ist dabei, dass die Gleitlagerfolie insgesamt faltenfrei und auch überlappungsfrei auf dem Kugelkopf sitzt.

Es hat sich als günstig erwiesen, die Gleitlagerfolie mit einer zentrischen Öffnung zu versehen, die vorzugsweise aber nicht zwingend rund ist. Mit einer solchen zentrischen Öffnung ist das Handling der Gleitlagerfolie bei der Montage deutlich erleichtert, weil eine Apparatur in diese Öffnung greifen und so die Gleitlagerfolie halten kann.

Die bereits oben erwähnte Gleitlagerfolie weist zweckmäßigerweise einen gesinterten Compound mit PTFE-Inhalt oder einen gesinterten PTFE-Compound auf. Dabei ist ein PTFE-Compound in einen flexiblen Metallgeweberücken eingesintert. Bei der Montage einer solchen Gleitlagerfolie in die Ausnehmung des Außenkörpers, also des Gehäuses des Traggelenkes, wird die PTFE-Lage dem Kugelkopf zugewandt, während das Metallgewebe in Richtung des Gehäuses bzw. des Außenkörpers weist.

Die eingangs beschriebene Kontur der Gleitlagerfolie mit einzelnen, einstückig aneinander hängenden Gleitlagerfolienstreifen, die über Schlitze zueinander getrennt sind, ist als einfaches Stanzteil herstellbar. Die besondere Außenkontur der Gleitlagerfolie kann jedoch auch auf andere Weise aus einem Endlosgleitlagerfolienband herausgetrennt werden, z.B. durch Herausschneiden.

In einer Weiterbildung der Erfindung ist die in das Gelenk eingelegte Gleitlagerfolie mit einem oberen umlaufenden Rand versehen, der durch die jeweils freien Enden der Gleitlagerfolienstreifen gebildet ist. Dieser umlaufende Rand ist so gestaltet, dass er vom untersten Punkt des Kugelkopfes aus gesehen auf gleicher Höhe verläuft. Damit ist ein geradliniger Verlauf des oberen Randes der Gleitlagerfolie im montierten Zustand sichergestellt. Dieser obere umlaufende Rand kann an dem erwähnten Anschlag sicher anschlagen und so für eine optimale Kammerung der Gleitlagerfolie sorgen.

Das erfindungsgemäße Gelenk wird nachfolgend im Zusammenhang mit mehreren Ausführungsbeispielen anhand von Figuren näher erläutert. Es zeigen:
- Figur 1: ein erstes Ausführungsbeispiel eines erfindungsgemäßen Traggelenkes, bei dem der Kugelzapfen samt Kugelkopf zur Längsachse des Traggelenks exakt ausgerichtet ist,
- Figur 1A: eine vergrößerte Ansicht des Traggelenks von Figur 1 im Bereich A,
- Figur 2: das Traggelenk von Figur 1 mit gekipptem Kugelzapfen,
- Figur 3: ein Ausführungsbeispiel einer Gleitlagerfolie, wie sie in Figur 1 und Figur 2 zwischen Kugelkopf und Außenkörper eingesetzt ist, in einem in einer Ebene aufgespanntem Zustand,
- Figur 4: ein aus Figur 3 heraus gebrochener einzelner Gleitlagerfolienstreifen entlang der Schnittlinie B von Figur 3,
- Figur 5: die Gleitlagerfolie von Figur 3 im gebogenen Zustand, wie sie in Figur 1 bzw. in Figur 2 in das Traggelenk eingesetzt ist,
- Figur 6: ein zweites Ausführungsbeispiel eines Traggelenks nach der Erfindung mit einer Gleitlagerfolie gemäß Figur 5,
- Figur 7: ein drittes Ausführungsbeispiel eines Traggelenks nach der Erfindung,
- Figur 8: ein viertes Ausführungsbeispiel eines Traggelenks nach der Erfindung,
- Figur 9: ein zweites Ausführungsbeispiel einer Gleitlagerfolie in einem in einer Ebene aufgespannten Zustand,
- Figur 10: die Gleitlagerfolie von Figur 9 im gebogenen Zustand,
- Figur 11: ein drittes Ausführungsbeispiel einer Gleitlagerfolie in einem in einer Ebene aufgespannten Zustand, und
- Figur 12: die Gleitlagerfolie von Figur 10 im gebogenen Zustand.

In den nachfolgenden Figuren bezeichnen, sofern nicht anderes angegeben, gleiche Bezugszeichen immer gleich Teile mit gleicher Bedeutung.

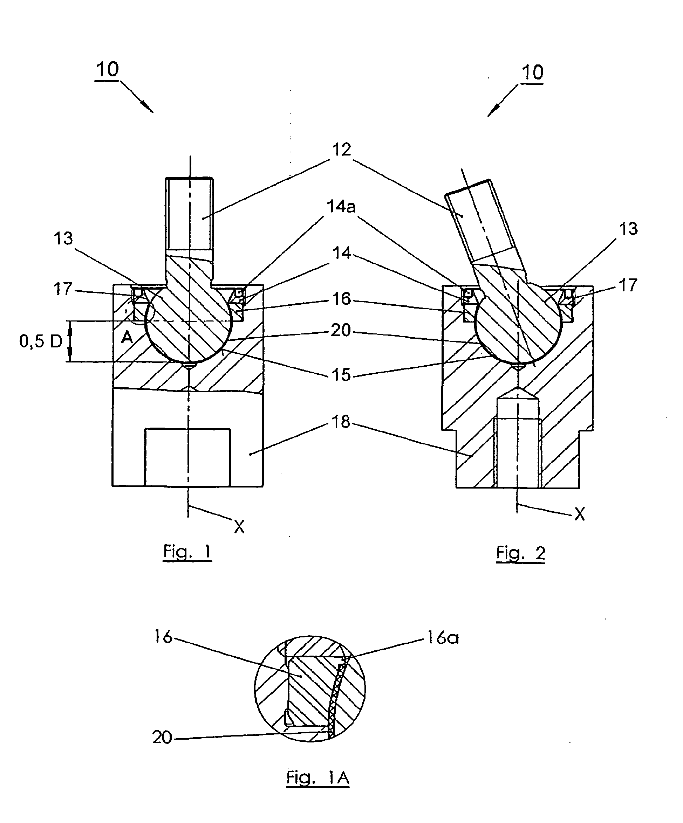

Figur 1 zeigt ein erstes Ausführungsbeispiel eines Traggelenkes. Dieses Traggelenk ist mit dem Bezugszeichen 10 bezeichnet. Das Traggelenk 10 weist einen Kugelzapfen 12 auf, an dessen unterem Ende ein Kugelkopf 13 anschließt. Im dargestellten Ausführungsbeispiel ist der Kugelzapfen 12 mit Kugelkopf 13 exakt zur Achse X des Traggelenks 10 ausgerichtet. Der Kugelkopf 13 sitzt in einer halbkugelschalenförmigen Ausnehmung 15 eines Gehäuses 18. Oberhalb der halbkugelschalenförmigen Ausnehmung 15 des Gehäuses 18 sitzt eine ringförmige Lagerschale 16. Der innere Durchmesser dieser ringförmigen Lagerschale 16 ist der Kugelkontur des Kugelkopfes 13 weitgehend angepasst, weist jedoch einen geringfügig größeren Durchmesser als der Außendurchmesser des Kugelkopfs 13 auf. Das Gleiche gilt für die halbkugelschalenförmige Ausnehmung 15 des Gehäuses 18.

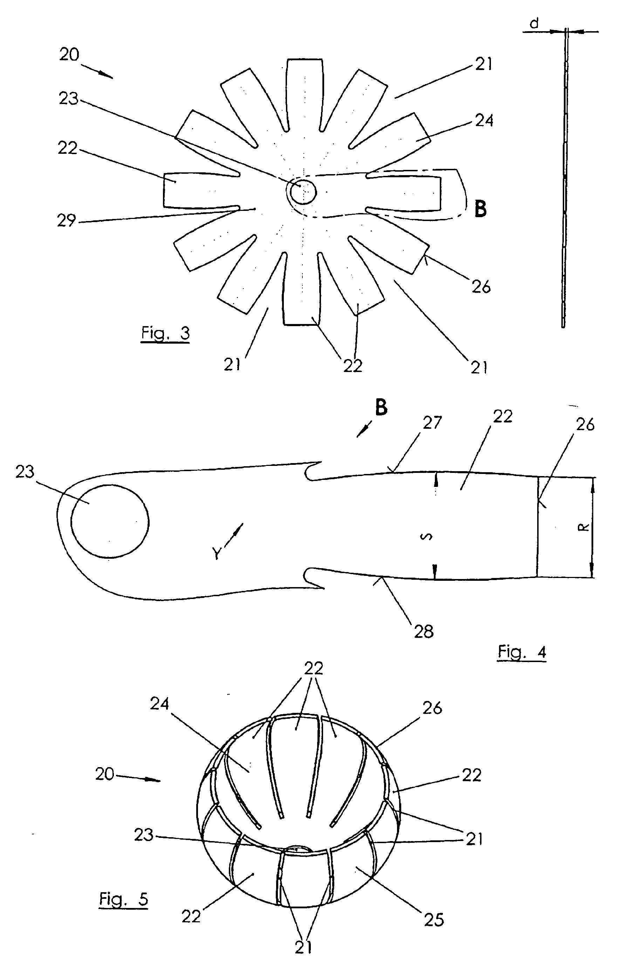

Zwischen dem Kugelkopf 13 und der halbkugelschalenförmigen Ausnehmung 15 des Gehäuses 18 sowie der Innenwandung der ringförmigen Lagerschale 16 sitzt eine Gleitlagerfolie 20, wie sie in den noch im Detail zu erläuternden Figuren 3 bis 5 beschrieben ist. Diese Gleitlagerfolie 20 sitzt becherförmig bzw. teilkugelschalenförmig in der spaltförmigen, sphärischen Öffnung, die zwischen Kugelkopf 13 und Gehäuse 18 einerseits sowie zwischen Innenwandung der ringförmigen Lagerschale 16 und dem Kugelkopf 13 andererseits gebildet ist.

Wie insbesondere die vergrößerte Darstellung in Figur 1A des kreisförmigen Ausschnitts A von Figur 1 zeigt, übergreift die Gleitlagerfolie 20 vollständig die untere Hälfte des Kugelkopfes 13 und stößt an einem ringförmig umlaufenden Bund bzw. Anschlag 16a der ringförmigen Lagerschale 16 an. Im dargestellten Ausführungsbeispiel von Figur 1 übergreift die Gleitlagerfolie 20 deutlich den halben Durchmesser 0,5 D des Kugelkopfes 13 und zwar bis zum etwa 2/3-fachen des Durchmessers D des Kugelkopfes 13. In Figur 1 ist oberhalb der ringförmigen Lagerschale 16 eine weitere ringförmige Öffnung im Gehäuse 18 vorgesehen. Diese ringförmige Öffnung im Gehäuse 18 verfügt über ein Gewinde 17 in welches eine Ringmutter 14 mit Außengewinde einschraubbar ist. Das Einschrauben der Ringmutter 14 in das Gehäuse 18 sichert und verspannt die ringförmige Lagerschale 16 im Gehäuse. Zum Eindrehen der Ringmutter 14 in das Gehäuse 18 sind auf der dem Kugelzapfen 12 zugewandten Seite der Ringmutter 14 Bohrungen 14a angebracht, an denen mit einem geeigneten Werkzeug eine Verdrehung der Ringmutter 14 möglich ist. Anstelle der Bohrungen 14a können auch Schlitze, Nuten, Aussparungen oder dgl. Verwendet werden.

Figur 2 zeigt das Traggelenk 10 von Figur 1 mit zur Achse X verkipptem Kugelzapfen 12.

In den nachfolgenden Figuren 3, 4 und 5 wird die Gleitlagerfolie und insbesondere die Kontur der Gleitlagerfolie 20 näher beschrieben.

Figur 3 zeigt - in einer Ebene aufgespannt - die in den Figuren 1 und 2 eingesetzte Gleitlagerfolie 20, wie diese z.B. aus einem von Band kommenden Flachmaterial bereitgestellt werden kann mit Blick auf die Gleitlagerfläche 24. Der Gleitlagerrücken 25 ist in Fig. 3 dem Betrachter abgewandt. Die Gleitlagerfolie 20 verfügt über eine zentrische Öffnung 23, von der sich im vorliegenden Ausführungsbeispiel radial insgesamt zwölf Gleitlagerfolienstreifen 22, die von Schlitzen 21 getrennt sind, weg erstrecken. Bei der Gleitlagerfolie 20 handelt es sich um eine an sich bekannte Gleitlagerfolie mit PTFE-Compound und darunter liegendem Metallgeflecht. In den Figuren 3 und 4 ist die das Metallgeflecht aufweisende Fläche der Gleitlagerfolie 20 dem Betrachter abgewandt und in Figur 5 an der Außenseite der Teilkugelschale angeordnet. Diese bekannte Gleitlagerfolie 20 ist jedoch besonders konturiert, damit diese becherförmig bzw. kugelschalenförmige oder teilkugelschalenförmig optimal um den Kugelkopf 13 gelegt werden kann. Unter einem optimalen Anlegen ist dabei ein überlappungsfreies und faltenfreies Anlegen der Gleitlagerfolie 20 an den Kugelkopf 13 zu verstehen. Die in diesem Ausführungsbeispiel vorgesehenen zwölf Gleitlagerfolienstreifen 22 hängen an einem mittleren, ringförmig umlaufenden Gleitlagerfolienstück 29. Dieses umlaufende Gleitlagerfolienstück 29 erstreckt sich vom Rand der Öffnung 23 bis zum Anfang der jeweiligen Schlitze 21. Wie in Figur 3 dargestellt, erstrecken sich die Schlitze 21 ungefähr vom äußeren Rand 26 jedes Gleitlagerfolienstreifens 22 etwa ein Viertel vom Durchmesser in Richtung Zentrum bzw. Öffnung 23.

Die einzelnen Schlitze 21 sind annährend dreieckförmig verlaufend gestaltet und verjüngen sich vom Rand 26 zur inneren Öffnung 23 hin. Wie insbesondere die vergrößerte Darstellung von Figur 4 des Details B aus Figur 3 zeigt, sind die einzelnen Gleitlagerfolienstreifen 22 etwas bauchig gestaltet. Unter bauchig gestaltet ist hierbei zu verstehen, dass die sich gegenüberliegenden Kanten 27, 28 - ausgehend von der Öffnung 23 - im Zentrum der Gleitlagerfolie von Figur 3 zum äußeren Rand 26 hin etwas nach außen wölben. Dies bedeutet, dass die einzelnen Gleitlagerfolienstreifen 22 an der in Figur 4 mit dem Bezugszeichen S gekennzeichneten Stelle etwas breiter sind als am äußeren Rand 26, der lediglich die Breite R hat. Wie zusätzlich erkennbar steht der Rand 26 jedes Gleitlagerfolienstreifens 22 senkrecht zur Symmetrielinie Y jedes Gleitlagerfolienstreifens 22.

Eine solche Kontur erlaubt es optimal die einzelnen Gleitlagerfolienstreifen 22 um den Kugelkopf 13 herum zu schmiegen, ohne das unnötig breite Schlitze 21 verbleiben, wie deutlich aus Figur 5 zu erkennen ist. Idealerweise sind nur sehr kleine Schlitze 21 oder überhaupt keine Schlitze mehr vorhanden, d. h. die einzelnen Gleitlagerfolienstreifen 22 berühren sich längsseitig. Figur 5 zeigt, zusätzlich den oberen, kreisförmig umlaufenden Rand 26, welcher auf Grund der exakt gleichen Länge der einzelnen Gleitlagerfolienstreifen 22 - bezogen auf einen untersten Punkt des Kugelkopfes 13 - bei korrekter Montage auf gleicher Höhe angeordnet ist. Dieser umlaufende Rand 26 findet seinen Anschlag im montierten Zustand der Gleitlagerfolie 20 an dem ringförmig umlaufenden Anschlag 16a der ringförmigen Lagerschale 16. Ein Verrutschen der Gleitlagerfolie 20 ist deshalb im montierten Zustand des Traggelenks 10 sicher ausgeschlossen. Die Gleitlagerfolie 20 wird durch diesen Anschlag 16a sicher "gekammert".

Wenngleich es ohne weiteres möglich ist, Schmiermittel zur Gleitlagerfolie 20 hinzuzufügen, ist dies jedoch nicht unbedingt notwendig. Ein schmiermittelfreies Traggelenk ist ebenfalls mit einer solch konturierten Gleitlagerfolie 20 darstellbar.

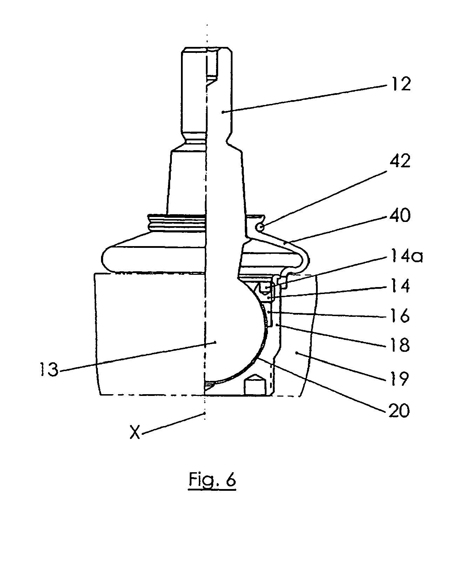

In den Figuren 6 bis 8 werden weitere Ausführungsbeispiele von Traggelenken 10 vorgestellt. All diesen Ausführungsbeispielen ist jedoch gemeinsam, dass eine Gleitlagerfolie 20, wie in Figur 3 bis 5 dargestellt, zum Einsatz kommt.

Figur 6 zeigt erneut den Kugelzapfen 12 mit unten anschließendem Kugelkopf 13 entlang der Achse X mit halb dargestellter Draufsicht und halber Schnittansicht. Zwischen Gehäuse 18 und Kugelkopf 13 befindet sich wiederum die Gleitlagerfolie 20. Der obere umlaufende Teil der Gleitlagerfolie 20 sitzt, wie in Figur 1, in der ringförmigen Lagerschale 16, die von oben her mit einer in das Gehäuse 18 eingeschraubten Ringmutter 14 gesichert ist. Im Unterschied zum Ausführungsbeispiel von Figur 1 sitzt das Gehäuse 18 in einem Außenteil 19. Zusätzlich ist das Traggelenk 10 mit einem Dichtungsbalg 40 abgedichtet. Dieser Dichtungsbalg 40 umgreift den unteren Teil des Zapfens 12 und ist an dieser Stelle mit einem ersten Spannring 42 gesichert. Der Dichtungsbalg 40 ist an seinem dem Kugelkopf 13 zugewandten Ende mit dem Gehäuse 18 verbunden, beispielsweise durch Vulkanisieren oder durch Einklemmen in eine entsprechende Nut des Gehäuses 18.

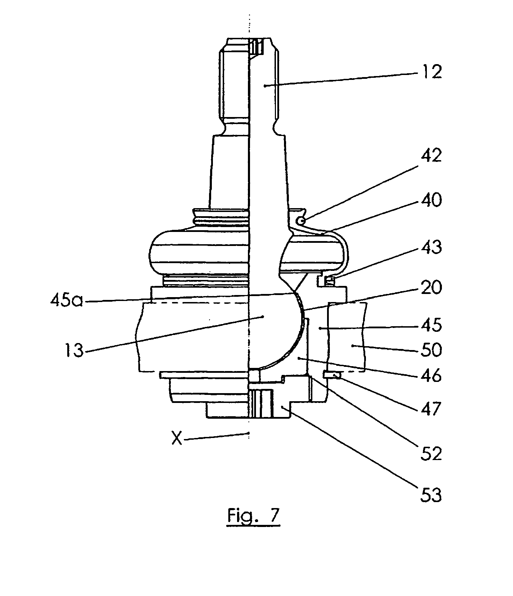

Das dritte Ausführungsbeispiel gemäß Figur 7 unterscheidet sich von dem Ausführungsbeispiel von Figur 6 dadurch, dass der Kugelkopf 13 in einer Lagerschale 46 sitzt, die eine halbkugelförmige Öffnung zur Aufnahme des Kugelkopfes 13 beinhaltet. Diese Lagerschale 46 ist von einem Gehäuse 45 umgriffen. Das Gehäuse 45 verfügt über eine ringförmige Innenwandung, die ähnlich wie die Lagerschale 16 von Figur 6 im oberen Teil den Kugelkopf 13 umgreift und zwar, mit einer dem Kugelkopf 13 angepassten Innenkontur. Bei diesem Ausführungsbeispiel hat das Gehäuse 45 ähnlich wie die Lagerschale 16 von Figur 6 einen ringförmig umlaufenden Anschlag 45a zur axialen Sicherung der Gleitlagerfolie 20. Das Gehäuse 45 ist in ein Außenteil 50 eingebaut und axial mit einem Sicherungsring 47 gesichert. Die Lagerschale 46 sitzt auf einer Mutter 53. Zwischen Mutter 53 und Lagerschale 46 kann ein O-Ring 52 platziert sein.

Das Traggelenk von Figur 7 weist ebenfalls einen Dichtungsbalg 40 auf, der von einem oberen ersten Spannring 42 und in dieser Ausführungsform von einem unteren zweiten Spannring 43 gegen den Kugelzapfen 12 gesichert ist.

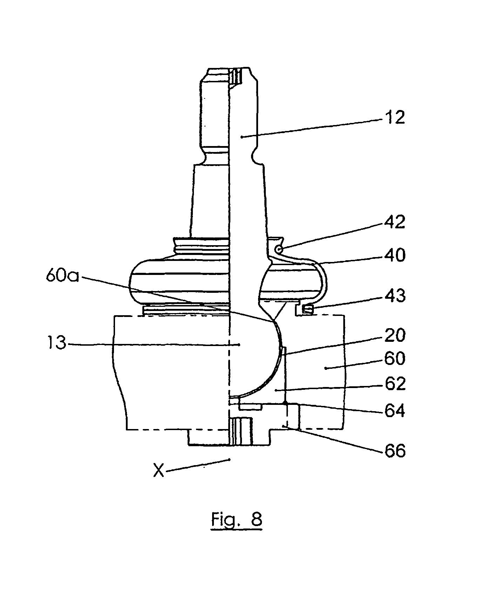

Das Ausführungsbeispiel von Figur 8 unterscheidet sich vom Ausführungsbeispiel von Figur 7 dadurch, dass das Außenteil 60 die Lagerschale 62 zum Kugelkopf 13 hin übergreift. Die Gleitlagerfolie 20 ragt hier nicht nur in die Ausnehmung der Lagerschale 62, sondern übergreift die Lagerschale 62, so dass das obere Ende der Gleitlagerfolie 20 zwischen Außenteil 60 und Kugelkopf 13 liegt. In diesem Ausführungsbeispiel ist der bereits aus den vorherigen Figuren bekannte Anschlag durch einen ringförmigen Anschlag 60a am Außenteil 60 zur axialen Sicherung der Gleitlagerfolie 20 realisiert.

Wenngleich im Zusammenhang mit den Figuren 3 bis 5 eine Gleitlagerfolie dargestellt wurde, bei der sich an einem ringförmig umlaufenden mittleren Gleitlagerfolienstück 29 zwölf Gleitlagerfolienstreifen 22 wegerstrecken, können auch andere Gleitlagerfolien Verwendung finden. Vorzugsweise sollten mindestens drei Gleitlagerfolienstreifen 22 vorgesehen werden. Als besonders geeignet haben sich etwa zwischen 5 und 12 Gleitlagerfolienstreifen erwiesen.

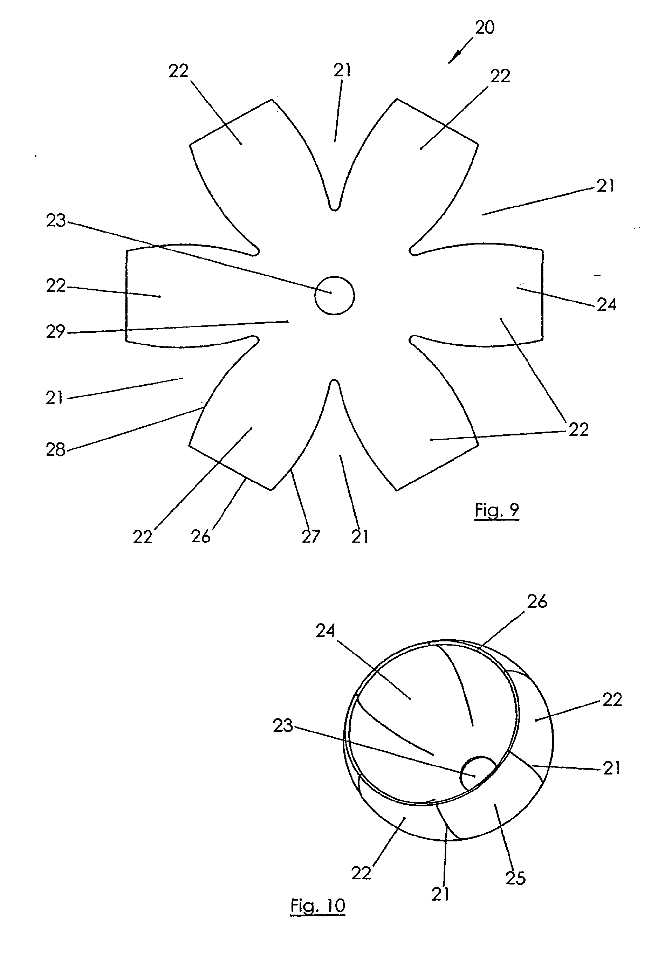

In den Figuren 9 und 10 ist eine mögliche Gleitlagerfolie mit insgesamt sechs sich wegerstreckenden Gleitlagerfolienstreifen 22 gezeigt. Auch diese sechs Gleitlagerfolienstreifen 22 erstrecken sich sternförmig von der mittleren Öffnung 23 weg. Zwischen den einzelnen Gleitlagerfolienstreifen 22 befinden sich wieder Schlitze 21. Die bereits aus den Figuren 3 bis 5 bekannten Bezugszeichen werden für dieses Ausführungsbeispiel der Gleitlagerfolie 20 weiter verwendet. Auch in diesem Ausführungsbeispiel sind die Kanten 27, 28 weitgehend parallel zueinander angeordnet.

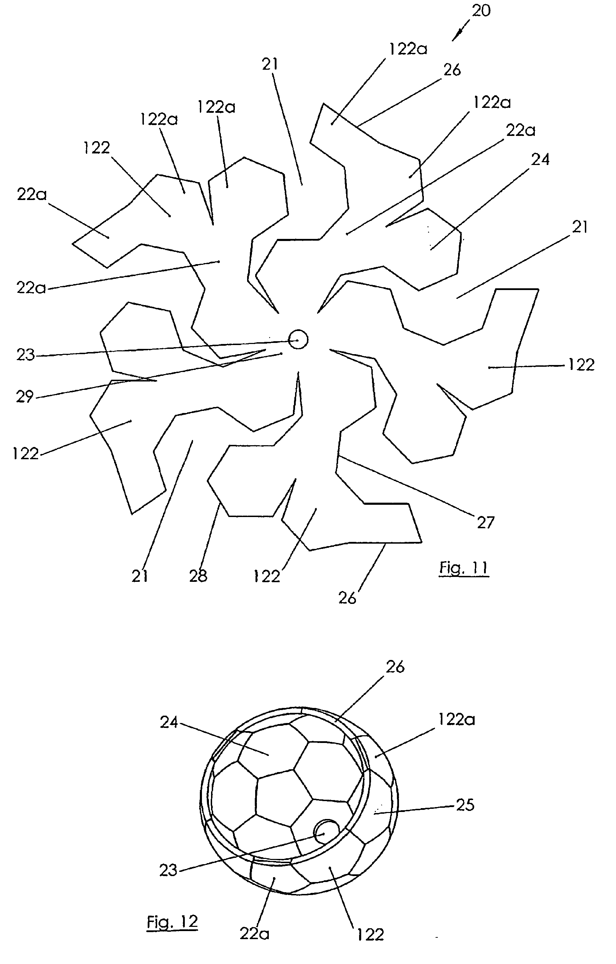

Ein ganz anderes Ausführungsbeispiel einer möglichen Gleitlagerfolie zeigen die Figuren 11 und 12. Dort sind die einzelnen Gleitlagerfolienstreifen 122 zwar von Schlitzen 21 wiederum getrennt. Die dargestellten fünf sich wiederum annähernd sternförmig wegerstreckenden Gleitlagerfolienstreifen 122 haben jedoch jetzt nicht parallel zueinander verlaufende Kanten 27, 28. Vielmehr sind die einzelnen Gleitlagerfolienstreifen 122 durch aneinandergereihte, wabenförmige Bereiche 122a gebildet. Durch eine besonders geschickte Aneinanderreihung dieser wabenförmigen Bereiche 122a können sich die einzelnen Bereiche 122a beim Umschlingen des Kugelkopfes eines Gelenkes optimal aneinanderlegen, sodass keine oder nahezu keine Schlitze entstehen. Vorteilhaft an einer solchen Anordnung ist, dass ein noch besseres Umschlingen des Kugelkopfes eines Gelenkes erreicht werden kann.

Figur 12 zeigt die aneinandergereihten wabenförmigen Bereiche 122a der einzelnen Gleitlagerfolienstreifen 122 im gebogenen Zustand, sodass eine Teilkugelschale gebildet ist.

### Bezugszeichenliste

| | |
|---|---|
| 10 | Gelenk, Traggelenk |
| 11 | Sicherungsring |
| 12 | Zapfen, Kugelzapfen |
| 13 | Kugelkopf |
| 14 | Ringmutter |
| 14a | Bohrung |
| 15 | halbkugelschalige Ausnehmung |
| 16 | Lagerschale |
| 16a | Anschlag |
| 17 | Gewinde |
| 18 | Gehäuse |
| 19 | Außenteil |
| 20 | Gleitlagerfolie |
| 21 | Schlitz |
| 22 | Gleitlagerfolienstreifen |
| 23 | Öffnung |
| 24 | Gleitlagerfläche |
| 25 | Gleitlagerrücken |
| 26 | Rand |
| 27 | erste Kante |
| 28 | zweite Kante |
| 29 | Gleitlagerfolienstück |
| 40 | Dichtungsbalg |
| 42 | erster Spannring |
| 43 | zweiter Spannring |
| 45 | Gehäuse |
| 45a | umlaufender Anschlag |
| 46 | Lagerschale |
| 47 | Sicherungsring |
| 50 | Außenteil |
| 52 | O-Ring |
| 53 | Mutter |
| 60 | Außenteil |
| 60a | Anschlag |
| 62 | Lagerschale |
| 64 | O-Ring |
| 66 | Mutter |
| | |
| 122 | Gleitlagerfolienstreifen |
| 122a | wabenförmiger Bereich |
| | |
| D | Durchmesser |
| d | Dicke |
| X | Längsachse |
| Y | Symmetrielinie |

## Patentansprüche

1. Gelenk mit einem Zapfen (12), welcher mit einem in einem mit einer Ausnehmung versehenen Außenkörper beweglich gelagerten Kugelkopf (13) verbunden ist, wobei zwischen dem Kugelkopf (13) und dem Außenkörper ein Gleitelement angeordnet ist, wobei
das Gleitelement aus einer flexiblen Gleitlagerfolie (20) gebildet ist, welche durch Schlitze getrennt eine Vielzahl von zumindest annähernd sternförmig zueinander angeordnete und einstückig aneinander hängende Gleitlagerfolienstreifen (22; 122) aufweist, wobei die Gleitlagerfolie (20) zwischen dem Außenkörper und dem Kugelkopf (13) eingelegt ist, derart, dass die Gleitlagerfolienstreifen (22) mit ihren jeweiligen Kanten (27, 28) überlappungs- und faltenfrei aneinander liegen, **dadurch gekennzeichnet, dass** der Außenkörper ein Gehäuse (18) und/oder eine Lagerschale (16) aufweist, mit einem ringförmigen Anschlag (16a) als axiale Begrenzung für die Gleitlagerfolie (20).

2. Gelenk nach Anspruch 1,
**dadurch gekennzeichnet, dass** die Gleitlagerfolie (20) mit ihren Gleitlagerfolienstreifen (22; 122) den Kugelkopf (13) teilkugelschalenförmig oder becherförmig umgibt.

3. Gelenk nach Anspruch 1 oder 2,
**dadurch gekennzeichnet, dass** die Gleitlagerfolie (20) mit ihren Gleitlagerfolienstreifen (22; 122) den Kugelkopf (13) ausgehend von einem axial tiefsten Punkt des Kugelkopfes (13) um mehr als den halben Durchmesser (D) des Kugelkopfes (13) übergreift, vorzugsweise um bis zu 2/3 des Durchmessers (D).

4. Gelenk nach Anspruch 1, 2 oder 3,
**dadurch gekennzeichnet, dass** das Gehäuse (18) eine mindest annähernde halbkugelförmige Ausnehmung zur Aufnahme des Kugelkopfes (13) sowie eine darüber befindliche ringförmige weitere Ausnehmung zur Aufnahme der ringförmigen Lagerschale (16) aufweist.

5. Gelenk nach einem der Ansprüche 1 bis 4,
**dadurch gekennzeichnet, dass** eine Ringmutter (14) zur axialen Sicherung des Kugelkopfes (13) mittels eines Gewindes (17) in das Gehäuse (18) auf die Lagerschale (16) geschraubt ist.

6. Gelenk nach einem der Ansprüche 1 bis 5,
**dadurch gekennzeichnet, dass** die Schlitze (21) bei Aufspannung der Gleitlagerfolie (20) in einer Ebene von außen nach innen verjüngend ausgebildet sind.

7. Gelenk nach Anspruch 6,
**dadurch gekennzeichnet, dass** jede der einzelnen Gleitlagerfolienstreifen (22; 122) in Radialrichtung gesehen nach außen bauchförmig gewölbt ist.

8. Gelenk nach einem der Ansprüche 1 bis 7,
**dadurch gekennzeichnet, dass** die Gleitlagerfolie (20) ein Metallgewebe aufweist.

9. Gelenk nach Anspruch 8,
**dadurch gekennzeichnet, dass** eine mit einem PTFE-Compound versehene Seite der Gleitlagerfolie (20) dem Kugelkopf (13) zugewandt ist.

10. Gelenk nach einem der Ansprüche 1 bis 9,
**dadurch gekennzeichnet, dass** die im Gelenk (10) eingelegte Gleitlagerfolie (20) einen oberen umlaufenden Rand (26) aufweist, welcher vom untersten Punkt des Kugelkopfes (13) aus gesehen auf gleicher Höhe zu diesem Punkt verläuft.

11. Gelenk nach einem der Ansprüche 1 bis 10,
**dadurch gekennzeichnet, dass** die Gleitlagerfolie (20) ohne Zusatz von Schmiermittel im Traggelenk (10) sitzt.

12. Gelenk nach einem der Ansprüche 1 bis 11,
**dadurch gekennzeichnet, dass** die Gleitlagerfolie (20) mindestens drei, vorzugsweise jedoch fünf bis zwölf Gleitlagerfolienstreifen (22) aufweist.

13. Gelenk nach einem der Ansprüche 1 bis 12,
**dadurch gekennzeichnet, dass** jeder der Gleitlagerfolienstreifen (22) zumindest annähernd parallel zueinander verlaufende Kanten (27, 28) aufweist.

14. Gelenk nach einem der Ansprüche 1 bis 13,
**dadurch gekennzeichnet, dass** jeder der Gleitlagerfolienstreifen (122) aus einer Vielzahl von wabenförmig aneinandergereihten Bereichen (122a) gebildet ist.

## Claims

1. A joint with a pin (12) which is connected to a ball head (13) mounted in a movable manner in an outer body provided with a recess, wherein a slide element is arranged between the ball head (13) and the outer body, wherein the slide element is formed from a flexible slide bearing film (20) which has a plurality of slide bearing film strips (22; 122) separated by slots and arranged at least substantially in a star-shaped manner with respect to one another and suspended one on the other in one piece, wherein the slide bearing film (20) is inserted between the outer body and the ball head (13) in such a way that the slide bearing film strips (22) rest one upon the other with the respective edges (27, 28) thereof without overlapping and without folds, **characterized in that** the outer body has a housing (18) and/or a bearing shell (16) with an annular stop (16a) as an axial limit for the slide bearing film (20).

2. A joint according to claim 1, **characterized in that** the strips (22; 122) of the slide bearing film (20) surround the ball head (13) in the form of a part-spherical shell or a cup.

3. A joint according to claim 1 or 2, **characterized in that** the strips (22; 122) of the slide bearing film (20) engage over the ball head (13) starting from an axially deepest point of the ball head (13) by more than half the diameter (D) of the ball head (13), preferably by up to 2/3 of the diameter (D).

4. A joint according to claim 1, 2 or 3, **characterized in that** the housing (18) has an at least approximately hemispherical recess for receiving the ball head (13) as well as an annular further recess situated above the latter for receiving the annular bearing shell (16).

5. A joint according to any one of claims 1 to 4, **characterized in that** a ring nut (14) for securing the ball head (13) axially by means of a thread (17) into the housing (18) is screwed onto the bearing shell (16).

6. A joint according to any one of claims 1 to 5, **characterized in that** the slots (21) are made tapering inwards from the outside when the slide bearing film (20) is clamped in one plane.

7. A joint according to claim 6, **characterized in that** each of the individual slide bearing film strips (22; 122) is curved in a convex manner towards the outside as viewed in the radial direction.

8. A joint according to any one of claims 1 to 7, **characterized in that** the slide bearing film (20) has a metal weave.

9. A joint according to claim 8, **characterized in that** a side of the slide bearing film (20) provided with a PTFE compound faces the ball head (13).

10. A joint according to any one of claims 1 to 9, **characterized in that** the slide bearing film (20) inserted in the joint (10) has an upper continuous edge (26) which, as viewed from the lowest point of the ball head (13), extends at the same height to this point.

11. A joint according to any one of claims 1 to 10, **characterized in that** the slide bearing film (20) is mounted in the carrier joint (10) without the addition of lubricant.

12. A joint according to any one of claims 1 to 11, **characterized in that** the slide bearing film (20) has at least three, but preferably from five to twelve, slide bearing film strips (22).

13. A joint according to any one of claims 1 to 12, **characterized in that** each of the slide bearing film strips (22) has edges (27, 28) extending at least approximately parallel to each other.

14. A joint according to any one of claims 1 to 13, **characterized in that** each of the slide bearing film strips (122) is formed from a plurality of areas (122a) engaging one in the other in the manner of a honeycomb.

## Revendications

1. Articulation comportant une tige (12) qui est reliée à une tête de rotule (13) logée mobile dans un corps externe équipé d'un évidement, un élément de glissement étant positionné entre la tête de rotule (13) et le corps extérieur, cet élément de glissement étant constitué par une feuille de palier à glissement flexible (20) comportant plusieurs bandes de feuille de palier à glissement (22, 122) séparées par des fentes, disposées au moins approximativement en étoile les unes par rapport aux autres et suspendues de manière à faire corps les unes avec les autres, cette feuille de palier à glissement (20) étant insérée entre le corps extérieur et la tête de rotule (13) de sorte que les bandes de la feuille de palier à glissement (22) s'appliquent les unes contre les autres par leurs arêtes respectives (27, 28) sans se chevaucher ni se plier,
**caractérisée en ce que**
le corps de base comporte un boitier (18) et/ou une coquille de boitier (16) comprenant une butée annulaire (16a) faisant office de limite axiale pour la feuille de palier à glissement (20).

2. Articulation conforme à la revendication 1,
**caractérisée en ce que**
la feuille de palier à glissement (20) entoure par ses bandes de feuille de palier à glissement (22, 122) la tête de rotule (13) sous la forme d'une calotte sphérique partielle ou d'une coupelle.

3. Articulation conforme à la revendication 1 ou 2,
**caractérisée en ce que**
la feuille de palier à glissement (20) vient en prise par ses bandes de feuille de palier à glissement (22, 122) au-dessus de la tête de rotule (13) à partir du point axial le plus profond de cette tête de rotule (13) sur plus de la moitié du diamètre (D) de celle-ci, de préférence jusqu'au deux tiers de ce diamètre (D).

4. Articulation conforme à la revendication 1, 2 ou 3,
**caractérisée en ce que**
le boitier (18) comporte un évidement au moins approximativement semi sphérique pour la réception de la tête de rotule (13) ainsi qu'un autre évidement annulaire se trouvant au-dessus de celui-ci pour la réception de la coquille de palier annulaire (16).

5. Articulation conforme à l'une des revendications 1 à 4,
**caractérisée en ce que**
pour permettre le maintien axial de la tête de rotule (13) un écrou annulaire (14) est vissé sur la coquille de palier (16) au moyen d'un filetage (17) réalisé dans le boitier (18).

6. Articulation conforme à l'une des revendications 1 à 5,
**caractérisée en ce que**
les fentes (21) sont réalisées, en s'amincissant de l'extérieur vers l'intérieur en serrant la feuille de palier à glissement (20) dans un plan.

7. Articulation conforme à la revendication 6,
**caractérisée en ce que**
chacune des bandes de la feuille de palier à glissement (22, 122) est incurvée vers l'extérieur selon une forme convexe considérée en direction radiale.

8. Articulation conforme à l'une des revendications 1 à 7,
**caractérisée en ce que**
la feuille de palier à glissement (20) comporte un tissu métallique.

9. Articulation conforme à la revendication 8,
**caractérisée en ce qu'**
une face de la feuille de palier à glissement (20) équipée d'un composé à base de PTFE est tournée vers la tête de rotule (13).

10. Articulation conforme à l'une des revendications 1 à 9,
**caractérisée en ce que**
la feuille de palier à glissement (20) insérée dans l'articulation (10) comporte un bord périphérique supérieur (26) qui s'étend, en considérant le point le plus inférieur de la tête de rotule (13) à la même hauteur de ce point.

11. Articulation conforme à l'une des revendications 1 à 10,
**caractérisée en ce que**
la feuille de palier à glissement (20) s'applique sur l'articulation support (10) sans addition d'agents lubrifiants.

12. Articulation conforme à l'une des revendications 1 à 11,
**caractérisée en ce que**
la feuille de palier à glissement (20) comporte au moins trois, mais de préférence cinq à douze bandes de feuille de palier à glissement (22).

13. Articulation conforme à l'une des revendications 1 à 12,
**caractérisée en ce que**
chacune des bandes de la feuille de palier à glissement (22) comporte des arêtes (27, 28) s'étendant au moins approximativement parallèlement les unes aux autres.

14. Articulation conforme à l'une des revendications 1 à 13,
**caractérisée en ce que**
chacune des bandes de la feuille de palier à glissement (122) est formée plusieurs zones (122a) alignées les unes aux autres en formant des alvéoles.
